# EUROPÄISCHE PATENTSCHRIFT

(11) **EP 2 888 110 B1**
(45) Veröffentlichungstag und Bekanntmachung des Hinweises auf die Patenterteilung: **25.05.2016**
(21) Anmeldenummer: 13736511.0
(22) Anmeldetag: 27.06.2013
(51) Int. Cl.: B41F 33/00, B41F 11/02

(54) **VERFAHREN ZUR INSPEKTION VON MINDESTENS EINEM EXEMPLAR EINES DRUCKERZEUGNISSES**
METHOD FOR INSPECTING AT LEAST ONE COPY OF A PRINTED PRODUCT
PROCÉDÉ D'INSPECTION D'AU MOINS UN EXEMPLAIRE D'UN PRODUIT D'IMPRESSION

(30) Priorität: 24.08.2012 DE 102012215114
(43) Veröffentlichungstag der Anmeldung: 01.07.2015
(73) Patentinhaber: Koenig & Bauer AG, 97080 Würzburg (DE)
(72) Erfinder: BLESS, Stefan, 32756 Detmold (DE); DIEDERICHS, Carsten, 32657 Lemgo (DE); HARTMANN, Felix, 33775 Versmold (DE); SACHER, Jörn, 32120 Hiddenhausen (DE)
(74) Vertreter: Koenig & Bauer AG
(86) Internationale Anmeldenummer: PCT/EP2013/063458
(87) Internationale Veröffentlichungsnummer: WO 2014/029532

(56) Entgegenhaltungen:
- EP-A1- 2 017 082
- WO-A1-97/36260
- WO-A1-2007/107234

## Beschreibung

Die Erfindung betrifft ein Verfahren zur Inspektion von mindestens einem Exemplar eines Druckerzeugnisses gemäß Anspruch 1.

Durch die DE 10 2004 021 047 B3 ist ein Verfahren zum Vergleich eines Bildes mit mindestens einem Referenzbild unter Verwendung eines Systems zumindest mit einer Bildaufnahmeeinheit und einem Bilddaten der Bildaufnahmeeinheit auswertenden Bildverarbeitungssystem mit einer Logikeinheit bekannt, wobei ein von der Bildaufnahmeeinheit aufgenommenes Bild mit dem mindestens einen Referenzbild verglichen wird, wobei die Logikeinheit den Bildvergleich ausführt, wobei der Bildvergleich eine Qualität einer von einer Druckmaschine produzierten Drucksache beurteilt, wobei die Logikeinheit die Qualität der Drucksache im laufenden Produktionsprozess der Druckmaschine hinsichtlich mehrerer Kriterien beurteilt, wobei die Beurteilung der Qualität der von der Druckmaschine produzierten Drucksache mindestens in zwei Verfahrenseinheiten gegliedert wird, wobei die Bildaufnahmeeinheit die mit ihrem Bildsensor aufgenommenen Bilddaten als digitale Daten an den Logikschaltkreis übergibt.

Der DE 43 21 177 A1 ist ein Verfahren zur Bildinspektion an mindestens einem in einer Druckmaschine erstellten Druckprodukt entnehmbar, wobei in einer Recheneinrichtung alle aktuellen in digitaler Form vorliegenden Bilddaten des Druckproduktes über einen Soll-Istwert-Vergleich mit Solldaten eines o.k.-Bildes verglichen werden. Ein solches Verfahren führt zwangsläufig zu einer Fehlermeldung, wenn das Druckprodukt im Zeitpunkt der Bilddatenerfassung entweder selbst ortsveränderlich ist oder mindestens ein Element aufweist, welches hinsichtlich eines auf dieses Druckprodukt bezogenen festen Bezugspunktes ortsvariant ist.

Durch die EP 2 017 082 A1 ist ein Verfahren zum rapportgenauen Erfassen einer laufenden Warenbahn, insbesondere einer gedruckten Bahn aus einem polymeren, textilen und/oder zellulosehaltigen Material bekannt, wobei mindestens ein periodisches Lagesignal erfasst wird, wobei wenigstens ein Teilbereich der Warenbahn optisch erfasst und in Daten umgewandelt wird, die gespeichert werden, um bei folgenden Rapporten und/oder gleich ausgebildeten Warenbahnen den jeweiligen Beginn des Rapports zu synchronisieren. Bevorzugt werden bei der optischen Erfassung der Warenbahn wenigstens ein Grau- und/oder Farbvektor berechnet, wobei aus dem Vektor mindestens eine positionsrelevante Größe berechnet und gespeichert wird. Bei der Synchronisation wenigstens in Bahnlaufrichtung wird z. B. mindestens eine Korrelationsfunktion der gespeicherten Daten mit den aktuell gemessenen Daten berechnet, wobei z. B. ein Maximum der Korrelationsfunktion berechnet und als Indikator für den Rapportanfang genutzt wird.

Insbesondere im Wertdruck, aber auch im hochwertigen Verpackungsdruck, werden Druckerzeugnisse produziert, z. B. Banknoten oder Wertpapiere oder Faltschachteln, welche mindestens ein hinsichtlich eines festen Bezugspunktes ortsvariantes Element aufweisen, wobei dieser Bezugspunkt in Bezug auf das betreffende Druckerzeugnis oder Exemplar dieses Druckerzeugnisses fest, d. h. ortsfest ausgebildet ist. Ein solches ortsvariantes Element ist z. B. ein in das betreffende Druckerzeugnis bzw. in ein Exemplar dieses Druckerzeugnisses eingearbeiteter Glanzstreifen, insbesondere ein Perlglanzstreifen oder,Iriodinstreifen. Beim Kippen des betreffenden Druckerzeugnisses bzw. des Exemplars des Druckerzeugnisses gegen eine Lichtquelle erweist sich ein Iriodinstreifen als ein glänzender Streifen, der seine Farbe z. B. von hellgelb bis goldgelb verändert und dann wieder verschwindet. Ein Glanzstreifen dient auf Banknoten insbesondere als Sicherheitsmerkmal. Bei einer Serie von mehreren Exemplaren jeweils einen Glanzstreifen aufweisenden Druckerzeugnissen, z. B. bei mehreren im Nutzen produzierten Banknoten im Wertdruck, kann produktionstechnisch bedingt ein solcher Glanzstreifen von einem Exemplar zum nächsten Exemplar des betreffenden Druckerzeugnisses hinsichtlich eines festen Bezugspunktes, z. B. eines Randes des betreffenden Exemplars dieses Druckerzeugnisses oder dessen Mitte, ortsvariant sein. Dies bedeutet, dass sich im Verlauf einer Inspektion dieser Serie von Exemplaren dieses Druckerzeugnisses eine Lage des Glanzstreifens von einem Exemplar des Druckerzeugnisses im Vergleich zu einem anderen Exemplar dieser selben Serie des Druckerzeugnisses zumindest geringfügig verändert und von einer erwarteten Lage abweicht, wobei diese Abweichung unregelmäßig und ohne Vorzugsrichtung sein kann. Diese Veränderlichkeit in der Lage bzw. Positionierung des z. B. als ein Glanzstreifen ausgebildeten ortsvarianten Elementes führt bei einer Inspektion mit einer ortsfesten Bilderfassungseinrichtung und mit einem herkömmlichen Soll-Istwert-Vergleich, bei dem aktuelle Bilddaten mit zuvor festgelegten, z. B. aus einer Druckvorstufe entnommenen statischen Referenzbilddaten verglichen werden, zu einer Fehlermeldung.

Der Erfindung liegt die Aufgabe zugrunde, ein Verfahren zur Inspektion von mindestens einem Exemplar eines Druckerzeugnisses zu schaffen, welches auch zur Inspektion von Exemplaren des betreffenden Druckerzeugnisses mit mindestens einem ortsvarianten Element geeignet ist.

Die Aufgabe wird erfindungsgemäß durch die Merkmale des Anspruches 1 gelöst.

Die mit der Erfindung erzielbaren Vorteile bestehen insbesondere darin, dass außer ortskonstante Elemente auch ortsvariante Elemente eines Exemplars des betreffenden Druckerzeugnisses zuverlässig inspiziert werden. Dies wird dadurch erreicht, dass für den Soll-Istwert-Vergleich des mindestens einen ortsvarianten Elementes Referenzbilddaten verwendet werden, die die veränderliche Lage dieses mindestens einen Elementes, d. h. dessen Ortsvarianz, berücksichtigen.

Ein Ausführungsbeispiel der Erfindung ist in den Zeichnungen dargestellt und wird im Folgenden näher beschrieben.

Es zeigen:
- Fig. 1: ein Blockdiagramm zur Vorbereitung der Inspektion von mindestens einem Exemplar des Druckerzeugnisses;
- Fig. 2: einen erweiterten Rahmen für die Bilderfassung;
- Fig. 3: ein Blockdiagramm zum Ablauf der Inspektion von mindestens einem Exemplar des Druckerzeugnisses.

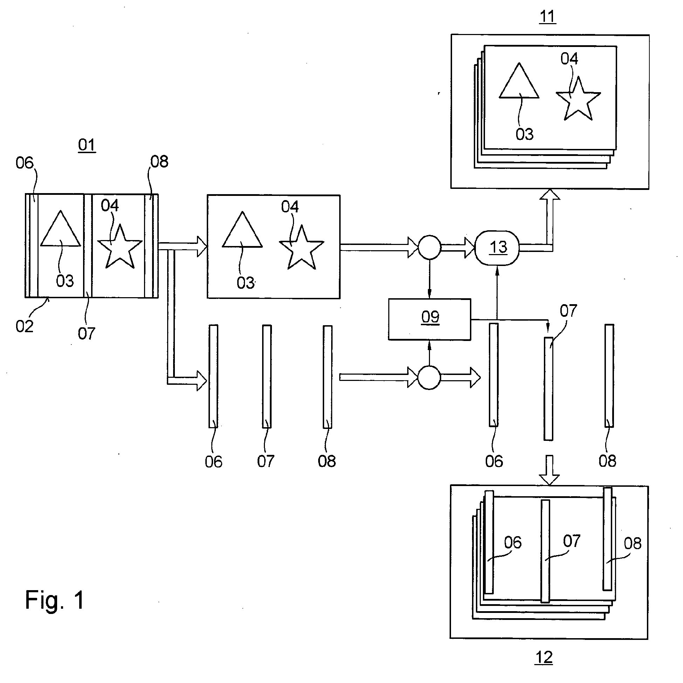

Fig. 1 zeigt in einem Blockdiagramm einige Verfahrensschritte zur Vorbereitung einer Inspektion von vorzugsweise mehreren Exemplaren eines Druckerzeugnisses auf, wobei bei dieser Inspektion insbesondere eine ein Druckbild aufweisende Oberfläche des betreffenden Exemplars dieses Druckerzeugnisses inspiziert wird. Bei dieser Vorbereitung der Inspektion des Druckerzeugnisses geht es darum, in einer so genannten Lernphase eines für die Inspektion verwendeten Systems, insbesondere für ein in einer Steuereinheit ausgeführtes Programm, mindestens eine geeignete Referenzabbildung für die nachfolgende spätere Durchführung der Inspektion zu generieren und bereit zu stellen, wobei dann während der der Lernphase nachfolgenden eigentlichen Inspektion ein Vergleich von einer aktuell erstellten Abbildung von mindestens einem Exemplar des betreffenden Druckerzeugnisses mit dieser in der Lernphase erstellten Referenzabbildung ausgeführt wird, wobei die Referenzabbildung eine fehlerfreie Abbildung des betreffenden Druckbildes von mindestens einem Exemplar des zu inspizierenden Druckerzeugnisses darstellt.

Zur Erstellung der Referenzabbildung wird in einem ersten Verfahrensschritt durch eine von dem Inspektionssystem verwendete Bilderfassungseinrichtung von mindestens einem Exemplar, vorzugsweise aber von mehreren Exemplaren des zu inspizierenden Druckerzeugnisses jeweils eine fotografische Abbildung 01 erstellt. Die Bilderfassung erfolgt vorzugsweise innerhalb einer Druckmaschine, z. B. in einer Rotationsdruckmaschine, insbesondere in einer Bogenrotationsdruckmaschine, während einer laufenden Produktion von mehreren Exemplaren des betreffenden Druckerzeugnisses. Als Druckerzeugnis werden von der Druckmaschine z. B. Banknoten oder andere Wertpapiere hergestellt, wobei vorzugsweise mehrere dieser Banknoten oder Wertpapiere gemeinsam auf einem Druckbogen angeordnet sind, wobei die Druckmaschine in einer bestimmten Produktion, d. h. in einem laufenden Druckprozess nacheinander mehrere, insbesondere mehrere tausend solcher Druckbogen bedruckt, wobei z. B. in Abhängigkeit vom verwendeten Inspektionssystem jeder dieser Druckbogen und/oder jede einzelne auf einem dieser Druckbogen angeordnete Banknote bzw. jedes einzelne Wertpapier jeweils als ein Exemplar dieses Druckerzeugnisses betrachtet wird. Die fotografische Abbildung 01 des mindestens einen Exemplars, vorzugsweise die jeweiligen fotografischen Abbildungen 01 von den jeweiligen mehreren Exemplaren des betreffenden Druckerzeugnisses wird bzw. werden mit der Bilderfassungseinrichtung des Inspektionssystems, z. B. mit einer optoelektronischen Kamera, insbesondere einer z. B. als Zeilenkamera ausgebildeten Halbleiterkamera erstellt, so dass die jeweilige fotografische Abbildung 01 der jeweiligen Exemplare des betreffenden Druckerzeugnisses z. B. an der der Kamera nachgeordneten Steuereinheit des Inspektionssystems jeweils in Form digitaler Bilddaten bereit gestellt wird. Die jeweilige fotografische Abbildung 01 von Exemplaren des betreffenden Druckerzeugnisses kann diese Exemplare jeweils entweder in ihrer Gesamtheit abbilden oder auch jeweils nur teilweise in einem ausgewählten Ausschnitt oder Abschnitt. Das betreffende Exemplar dieses Druckerzeugnisses bzw. dessen Ausschnitt oder Abschnitt weist insbesondere innerhalb seines Druckbildes mindestens ein hinsichtlich eines festen Bezugspunktes 02 des betreffenden Exemplars dieses Druckerzeugnisses ortskonstantes Element 03; 04 und mindestens ein hinsichtlich desselben festen Bezugspunktes 02 ortsvariantes Element 06; 07; 08 auf, wobei während eines selben Abbildungsvorganges von den jeweiligen Exemplaren des betreffenden Druckerzeugnisses jeweils sowohl das mindestens eine ortskonstante Element 03; 04 des betreffenden Exemplars des Druckerzeugnisses als auch das mindestens eine ortsvariante Element 06; 07; 08 des betreffenden Exemplars des Druckerzeugnisses gleichzeitig erfasst werden, so dass die jeweilige auszuwertende fotografische Abbildung 01 des betreffenden Exemplars des Druckerzeugnisses jeweils sowohl mindestens ein ortskonstantes Element 03; 04 als auch mindestens ein ortsvariantes Element 06; 07; 08 enthält. Das betreffende Exemplar des Druckerzeugnisses ist z. B. rechteckförmig ausgebildet, da das Exemplar des Druckerzeugnisses z. B. als eine Banknote oder als ein Blatt eines Wertpapiers ausgebildet ist. Der feste Bezugspunkt 02 des betreffenden Exemplars dieses Druckerzeugnisses ist z. B. ein ausgewählter Rand oder ein ausgewählter Eckpunkt des betreffenden Exemplars dieses Druckerzeugnisses. In dem in der Fig. 1 dargestellten Beispiel sind das mindestens eine ortskonstante Element 03; 04 des betreffenden Exemplars dieses Druckerzeugnisses als ein Dreieck bzw. als ein Stern dargestellt, wohingegen das mindestens eine ortsvariante Element 06; 07; 08 des betreffenden Exemplars dieses Druckerzeugnisses jeweils als ein das betreffende Exemplar z. B. parallel zu dessen Schmalseite durchlaufender Streifen dargestellt ist.

Noch während der Lernphase des Inspektionssystems wird in einem der Bilderfassung nachfolgenden zweiten Verfahrensschritt die fotografische Abbildung 01 des betreffenden Exemplars dieses Druckerzeugnisses z. B. mittels eines in der Steuereinheit ablaufenden Trennverfahrens in zwei Teile zerlegt, und zwar derart, dass aus der erstellten fotografischen Abbildung 01 des betreffenden Exemplars dieses Druckerzeugnisses die darin enthaltene fotografische Abbildung des mindestens einen hinsichtlich des festen Bezugspunktes 02 ortsvarianten Elementes 06; 07; 08 von der gleichfalls in derselben erstellten fotografischen Abbildung 01 des betreffenden Exemplars des Druckerzeugnisses enthaltenen fotografischen Abbildung des mindestens einen hinsichtlich des festen Bezugspunktes 02 ortskonstanten Elementes 03; 04 separiert wird, wobei jede dieser beiden Teilabbildungen nachfolgend in einem eigenen Datenverarbeitungszweig - in der Fig. 1 durch verschiedene Pfeile dargestellt - weiter verarbeitet wird. Durch diesen zweiten Verfahrensschritt wird das mindestens eine ortsvariante Element 06; 07; 08 vom z. B. als Hintergrundbild ausgebildeten ortskonstanten Element 03; 04 der fotografischen Abbildung 01 des betreffenden Exemplars dieses Druckerzeugnisses getrennt.

In der Lernphase des Inspektionssystems wird nach dieser Separierung in einem dritten Verfahrensschritt die fotografische Abbildung des mindestens einen hinsichtlich des festen Bezugspunktes 02 ortskonstanten Elementes 03; 04 z. B. von der Steuereinheit als eine mit dem mindestens einen ortskonstanten Element 03; 04 korrespondierende Referenzabbildung in einem mit der Steuereinheit verbundenen ersten Speicher 11 gespeichert und auch die fotografische Abbildung des mindestens einen hinsichtlich des festen Bezugspunktes 02 ortsvarianten Elementes 06; 07; 08 wird z. B. von der Steuereinheit als eine mit dem jeweiligen mindestens einen ortsvarianten Element 06; 07; 08 korrespondierende Referenzabbildung in einem mit der Steuereinheit verbundenen zweiten Speicher 12 gespeichert. In der Lernphase des Inspektionssystems werden vorzugsweise mehrere derartige Referenzabbildungen von Exemplaren dieses Druckerzeugnisses generiert und abgespeichert, was in der Fig. 1 durch in den Speichern 11; 12 "gestapelte" Referenzabbildungen angedeutet ist. Insbesondere wenn die Exemplare eines bestimmten Druckerzeugnisses jeweils mehrere voneinander verschiedene ortsvariante Elemente 06; 07; 08 aufweisen, wird für jedes dieser ortsvarianten Elemente 06; 07; 08 jeweils eine eigene korrespondierende Referenzabbildung erzeugt und gespeichert.

Vorzugsweise noch vor der Speicherung der jeweiligen Referenzabbildung in einem der Speicher 11; 12 kann in einem Zwischenschritt für die fotografische Abbildung des mindestens einen hinsichtlich des festen Bezugspunktes 02 ortskonstanten Elementes 03; 04 und/oder für die fotografische Abbildung des mindestens einen hinsichtlich des festen Bezugspunktes 02 ortsvarianten Elementes 06; 07; 08 z. B. durch Ausführung eines speziellen Rechenverfahrens jeweils eine globale Positionskorrektur 09 ausgeführt werden, indem die Steuereinheit z. B. in den jeweiligen durch die Separierung entstandenen Datenverarbeitungszweigen jeweils bei einer erwarteten und/oder erkannten Lageveränderung der jeweiligen Elemente 03; 04; 06; 07; 08 vorzugsweise in Echtzeit für jedes dieser Elemente 03; 04; 06; 07; 08 jeweils einen Bewegungsvektor zur Kompensation der bei der betreffenden Abbildung erwarteten und/oder erkannten Lageveränderung berechnet, welcher z. B. in einem Filter 13, insbesondere in einem von der Steuereinheit ausgeführten Filterverfahren benutzt wird, um die jeweilige Lageveränderung des betreffenden ortskonstanten Elementes 03; 04 und/oder des ortsvarianten Elementes 06; 07; 08 vor einer Speicherung der jeweiligen Referenzabbildung in einem der Speicher 11; 12 und/oder vor Ausführung des jeweiligen Vergleiches mit der jeweiligen Referenzabbildung zu kompensieren.

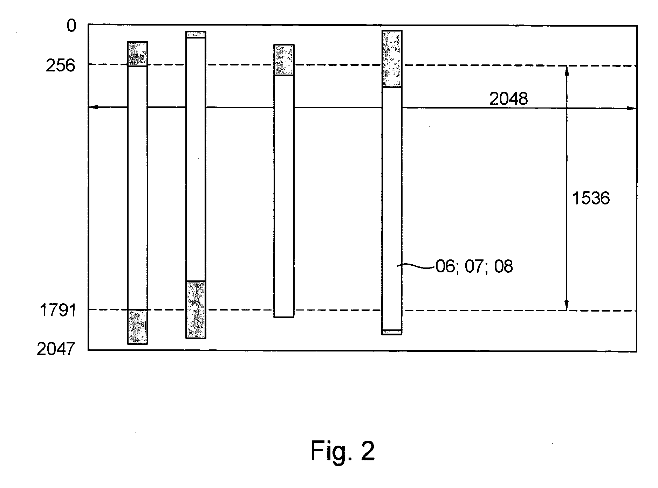

Wie die Fig. 1 andeutet, können die ortsvarianten Elemente 06; 07; 08 von dem jeweiligen Exemplar des Druckerzeugnisses aufgrund ihrer Lageveränderlichkeit einen derartigen Versatz aufweisen, dass sie nicht mehr von einem bei der Bilderfassung verwendeten Standardrahmen erfasst werden. Beispielsweise kann die Situation entstehen, dass ein in dem jeweiligen Exemplar des Druckerzeugnisses angeordneter Glanzstreifen bzw. Iriodinstreifen durch seine vertikale Verschiebung im Druckbild des betreffenden Exemplars nicht mehr vollständig vom Standardrahmen der mittels der Bilderfassungseinrichtung des Inspektionssystems ausgeführten Bilderfassung erfasst wird. Daher kann vorgesehen werden, dass dieser Standardrahmen der Bilderfassungseinrichtung z. B. von der Steuereinheit zumindest in eine in der Bilderfassungsebene liegende Richtung vergrößert wird. So kann eine auf z. B. 2048x1536 Pixel begrenzte Bilderfassungsfläche, welche in diesem Beispiel den Rahmen für die Bilderfassung definiert, z. B. mittels eines Programms, z. B. eines digitalen Zooms, auf z. B. 2048x2048 Pixel erweitert werden, um einen z. B. vertikal verschobenen Glanzstreifen, der z. B. in einer auf einem Druckbogen gedruckten Banknote zu inspizieren ist, in seiner fotografischen Abbildung vollständig abzubilden. Denn für die Inspektion sollte auch das betreffende oder jedes ortsvariante Element 06; 07; 08 des betreffenden Exemplars des Druckerzeugnisses jeweils komplett innerhalb des erweiterten Rahmens der Bilderfassung liegen, um keine wertvolle Information zu verlieren. Dies wird beispielhaft in der Fig. 2 aufgezeigt, wobei in dieser Fig. 2 vier jeweils als ein Streifen ausgebildete ortsvariante Elemente 06; 07; 08 jeweils in Verbindung mit ihrem jeweiligen Streubereich bezüglich ihrer jeweiligen Lage dargestellt sind.

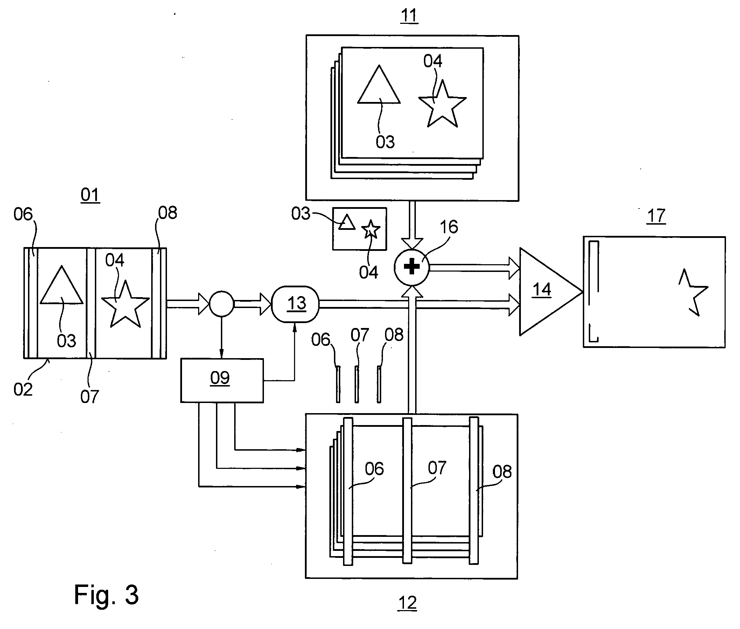

Fig. 3 zeigt nun ein Blockdiagramm zum Ablauf der eigentlichen Inspektion der vorzugsweise mehreren Exemplare des Druckerzeugnisses. Nach Beendigung der Lernphase des Inspektionssystems wird die Steuereinheit von ihrem die Lernphase betreffenden Modus automatisch oder manuell in ihren Modus zur Ausführung der Inspektion umgeschaltet. Wie zuvor in der Lernphase weist eine von einer Bilderfassungseinrichtung, z. B. von einer Kamera aktuell erstellte fotografische Abbildung 01 des zu inspizierenden Exemplars des Druckerzeugnisses sowohl mindestens ein hinsichtlich eines festen Bezugspunktes 02 ortskonstantes Element 03; 04 und mindestens ein hinsichtlich desselben festen Bezugspunktes 02 ortsvariantes Element 06; 07; 08 auf. Sowohl die fotografische Abbildung des mindestens einen hinsichtlich des festen Bezugspunktes 02 ortskonstanten Elementes 03; 04 als auch die fotografische Abbildung des mindestens einen hinsichtlich des festen Bezugspunktes 02 ortsvarianten Elementes 06; 07; 08 werden in dem dargestellten Beispiel jeweils für sich einer globalen Positionskorrektur 09 unterzogen. Bei einer erwarteten und/oder erkannten Lageveränderung der jeweiligen Elemente 03; 04; 06; 07; 08 wird von der Steuereinheit vorzugsweise in Echtzeit für jedes dieser Elemente 03; 04; 06; 07; 08 jeweils ein Bewegungsvektor berechnet, welcher z. B. in einem Filter 13, insbesondere in einem von der Steuereinheit mittels eines Programms ausgeführten Filterverfahren benutzt wird. Die z. B. derart aufbereitete fotografische Abbildung 01 des aktuell zu inspizierenden Exemplars dieses Druckerzeugnisses wird einem Vergleicher 14 zugeführt, wobei dieser Vergleicher 14 auch durch ein in der Steuereinheit ausgeführtes Verfahren realisiert sein kann. Diesem Vergleicher 14 werden sowohl die mit dem mindestens einen ortskonstanten Element 03; 04 korrespondierende, in dem ersten Speicher 11 gespeicherte Referenzabbildung als auch die mit dem mindestens einen ortsvarianten Element 06; 07; 08 korrespondierende, in dem zweiten Speicher 12 gespeicherte Referenzabbildung zugeführt. Die mit dem mindestens einen ortskonstanten Element 03; 04 korrespondierende, in dem ersten Speicher 11 gespeicherte Referenzabbildung und die mit dem mindestens einen ortsvarianten Element 06; 07; 08 korrespondierende, in dem zweiten Speicher 12 gespeicherte Referenzabbildung können z. B. von der Steuereinheit noch vor Ausführung des jeweiligen Vergleiches, d. h. bevor sie dem Vergleicher 14 zugeführt werden, datentechnisch, z. B. in einer Datei, zu einer einzigen virtuellen oder synthetischen Referenzabbildung zusammengefasst worden sein, was in der Fig. 2 durch die Summierstelle 16 angedeutet ist. Trotz dieser datentechnischen Zusammenfassung der beiden gespeicherten Referenzabbildungen z. B. in einer selben Datei bleiben der jeweilige Informationsgehalt beider Referenzabbildungen jeweils für sich erhalten. Im Vergleicher 14 wird die in der aktuell erstellten fotografischen Abbildung 01 des zu inspizierenden Exemplars des Druckerzeugnisses enthaltene fotografische Abbildung des mindestens einen ortskonstanten Elementes 03; 04 mit der mit dem mindestens einen ortskonstanten Element 03; 04 korrespondierenden Referenzabbildung und die in derselben aktuell erstellten fotografischen Abbildung 01 des betreffenden Exemplars des zu inspizierenden Druckerzeugnisses enthaltene fotografische Abbildung des mindestens einen ortsvarianten Elementes 06; 07; 08 mit der mit dem mindestens einen ortsvarianten Element 06; 07; 08 korrespondierenden Referenzabbildung verglichen. Im Fall einer bei diesem Vergleich eine zuvor festgelegte zulässige Toleranzgrenze überschreitenden oder unterschreitenden Abweichung erzeugt die Steuereinheit eine Fehlermeldung 17 z. B. in Form eines Fehlerbildes mit z. B. nur bruchstückhaft wiedergegebenen Elementen 03; 04; 06; 07; 08, welches Fehlerbild z. B. an einem vorzugsweise mit der Steuereinheit verbundenen Monitor angezeigt wird. Das Fehlerbild zeigt z. B. eine Differenz zwischen der erstellten fotografischen Abbildung 01 des betreffenden Exemplars des zu inspizierenden Druckerzeugnisses und z. B. der zuvor gebildeten virtuellen Referenzabbildung auf. Wenn diese Differenz eine zuvor festgelegte Schwelle überschreitet, gilt das jeweilige inspizierte Exemplar des betreffenden Druckerzeugnis als fehlerhaft, andernfalls als ausreichend fehlerfrei. Aufgrund der vorangegangenen Erzeugung einer eigenen Referenzabbildung für das mindestens eine ortsvariante Element 06; 07; 08 oder der jeweiligen eigenen Referenzabbildung für jedes der ortsvarianten Elemente 06; 07; 08 wird während der Inspektion des Druckbildes des jeweiligen Exemplars des zu inspizierenden Druckerzeugnisses die jeweilige betreffende korrespondierende Referenzabbildung auf das jeweilige in der aktuell erstellten fotografischen Abbildung 01 des jeweiligen Exemplars des zu inspizierenden Druckerzeugnisses enthaltene ortsvariable Element 06; 07; 08 positioniert. Dies erfolgt z. B. dadurch, dass die Steuereinheit vorzugsweise in Echtzeit z. B. pixelweise prüft, ob die für ein bestimmtes ortsvariantes Element 06; 07; 08 gespeicherte Referenzabbildung mit dem jeweiligen insbesondere vollständig aktuell erfassten ortsvariablen Element 06; 07; 08 innerhalb eines zuvor festgelegten, zulässigen Toleranzbereiches in Übereinstimmung zu bringen ist.

Erfindungsgemäß ergibt sich ein Verfahren zur Inspektion von mindestens einem Exemplar eines Druckerzeugnisses,
a) wobei in einem von einer Druckmaschine ausgeführten Druckprozess mindestens ein erstes Exemplar dieses Druckerzeugnisses und mindestens ein zweites Exemplar desselben Druckerzeugnisses hergestellt werden,
b) wobei mittels einer Bilderfassungseinrichtung eines Inspektionssystems von dem mindestens einen ersten Exemplar des Druckerzeugnisses eine fotografische Abbildung 01 erstellt wird,
c) wobei in einer der Inspektion vorausgehenden Lernphase des Inspektionssystems aus der von dem mindestens einen ersten Exemplar des Druckerzeugnisses erstellten fotografischen Abbildung 01 eine darin enthaltene fotografische Abbildung von mindestens einem hinsichtlich eines für das betreffende Exemplar festen Bezugspunktes 02 ortsvarianten Element 06; 07; 08 von einer gleichfalls in derselben erstellten fotografischen Abbildung 01 des betreffenden ersten Exemplars des Druckerzeugnisses enthaltenen fotografischen Abbildung von mindestens einem hinsichtlich desselben festen Bezugspunktes 02 ortskonstanten Element 03; 04 separiert wird,
d) wobei die aus der fotografischen Abbildung 01 des mindestens einen ersten Exemplars des Druckerzeugnisses gewonnene Abbildung des mindestens einen ortskonstanten Element 03; 04 als eine Referenzabbildung für das jeweilige mindestens eine ortskonstante Element 03; 04 und die aus derselben fotografischen Abbildung 01 des mindestens einen ersten Exemplars des Druckerzeugnisses gewonnene Abbildung des mindestens einen ortsvarianten Element 06; 07; 08 als eine andere Referenzabbildung für das jeweilige mindestens eine ortsvariante Element 06; 07; 08 verwendet werden,
e) wobei während der der Lernphase nachfolgenden Inspektion mittels der Bilderfassungseinrichtung des Inspektionssystems von dem mindestens einen zweiten Exemplar des Druckerzeugnisses gleichfalls eine fotografische Abbildung 01 erstellt wird,
f) wobei aus der während der Inspektion von dem mindestens einen zweiten Exemplar des Druckerzeugnisses erstellten fotografischen Abbildung 01 eine darin enthaltene fotografische Abbildung von mindestens einem hinsichtlich eines für das betreffende Exemplar festen Bezugspunktes 02 ortsvarianten Element 06; 07; 08 von einer gleichfalls in derselben erstellten fotografischen Abbildung 01 des betreffenden zweiten Exemplars des Druckerzeugnisses enthaltenen fotografischen Abbildung von mindestens einem hinsichtlich desselben festen Bezugspunktes 02 ortskonstanten Element 03; 04 separiert wird,
g) wobei die in der fotografischen Abbildung 01 des mindestens einen zweiten Exemplars des Druckerzeugnisses enthaltene fotografische Abbildung des mindestens einen ortskonstanten Elementes 03; 04 mit der aus dem mindestens einen ersten Exemplar des Druckerzeugnisses gewonnenen, mit dem mindestens einen ortskonstanten Element 03; 04 korrespondierenden Referenzabbildung und die in derselben fotografischen Abbildung 01 desselben mindestens einen zweiten Exemplars des Druckerzeugnisses enthaltene fotografische Abbildung des mindestens einen ortsvarianten Elementes 06; 07; 08 mit der jeweiligen aus dem mindestens einen ersten Exemplar des Druckerzeugnisses gewonnenen, mit dem betreffenden ortsvarianten Element 06; 07; 08 korrespondierenden Referenzabbildung verglichen werden.

Vorteilhafte Ausgestaltungen und/oder Weiterbildungen, die in Verbindung mit dem vorstehenden Verfahren in beliebiger Kombination verwendet werden können, sehen insbesondere vor,
a) dass die jeweilige Separierung des mindestens einen hinsichtlich des festen Bezugspunktes ortsvarianten Elementes 06; 07; 08 von dem in derselben erstellten fotografischen Abbildung 01 des betreffenden ersten oder zweiten Exemplars enthaltenen fotografischen Abbildung des mindestens einen hinsichtlich des festen Bezugspunktes ortskonstanten Elementes 03; 04 mittels eines Filters oder mittels eines Filterverfahrens erfolgt,
b) dass in der der Inspektion vorausgehenden Lernphase nach der Separierung mindestens eine fotografische Abbildung des mindestens einen hinsichtlich des festen Bezugspunktes 02 ortskonstanten Elementes 03; 04 als die mit dem mindestens einen ortskonstanten Element 03; 04 korrespondierende Referenzabbildung in einem ersten Speicher 11 und mindestens eine fotografische Abbildung des mindestens einen hinsichtlich des festen Bezugspunktes 02 ortsvarianten Elementes 06; 07; 08 als die mit dem jeweiligen ortsvarianten Element 06; 07; 08 korrespondierende Referenzabbildung in einem zweiten Speicher 12 gespeichert werden,
c) dass bei dem mindestens einen ersten Exemplar des Druckerzeugnisses und/oder bei dem mindestens einen zweiten Exemplar des Druckerzeugnisses für die jeweilige mindestens eine fotografische Abbildung des mindestens einen hinsichtlich des festen Bezugspunktes 02 ortskonstanten Elementes 03; 04 und/oder für die jeweilige mindestens eine fotografische Abbildung des mindestens einen hinsichtlich des festen Bezugspunktes 02 ortsvarianten Elementes 06; 07; 08 jeweils eine Positionskorrektur 09 ausgeführt werden, indem bei einer erwarteten und/oder erkannten Lageveränderung der jeweiligen Elemente 03; 04; 06; 07; 08 jeweils ein Bewegungsvektor zur Kompensation der bei der betreffenden Abbildung erwarteten und/oder erkannten Lageveränderung berechnet wird,
d) dass die Kompensation der erwarteten und/oder erkannten Lageveränderung bei dem mindestens einen ersten Exemplar des Druckerzeugnisses vor einer Speicherung der jeweiligen Referenzabbildung in einem der Speicher 11; 12 ausgeführt wird,
e) dass die Kompensation der erwarteten und/oder erkannten Lageveränderung bei dem mindestens einen zweiten Exemplar des Druckerzeugnisses vor Ausführung des jeweiligen Vergleiches mit der jeweiligen Referenzabbildung ausgeführt wird,
f) dass die Separierung der fotografischen Abbildung 01 des mindestens einen ersten Exemplars des Druckerzeugnisses und/oder die Separierung der fotografischen Abbildung 01 des mindestens einen zweiten Exemplars des Druckerzeugnisses jeweils von einer Steuereinheit ausgeführt oder zumindest gesteuert wird bzw. werden,
g) dass die Ausführung der Positionskorrektur 09 und/oder die Speicherung der jeweiligen Referenzabbildung in einem der Speicher 11; 12 jeweils von der Steuereinheit ausgeführt oder zumindest gesteuert wird bzw. werden,
h) dass die Separierung der fotografischen Abbildung 01 des mindestens einen ersten Exemplars des Druckerzeugnisses und/oder die Separierung der fotografischen Abbildung 01 des mindestens einen zweiten Exemplars des Druckerzeugnisses jeweils in Echtzeit ausgeführt werden,
i) dass die Ausführung der Positionskorrektur 09 und/oder die Speicherung der jeweiligen Referenzabbildung in einem der Speicher 11; 12 jeweils in Echtzeit ausgeführt werden,
j) dass ein der Bilderfassung dienender Standardrahmen der Bilderfassungseinrichtung von der Steuereinheit zumindest in einer in der Bilderfassungsebene liegenden Richtung vergrößert wird,
k) dass als fester Bezugspunkt 02 des betreffenden Exemplars des Druckerzeugnisses jeweils ein Rand dieses Exemplars des Druckerzeugnisses oder dessen Mitte verwendet wird,
l) dass dieses Verfahren im Wertdruck oder im Verpackungsdruck verwendet wird,
m) dass als Druckerzeugnis eine Banknote oder ein Wertpapier oder eine Faltschachtel verwendet wird,
n) dass als das mindestens eine ortsvariante Element 06; 07; 08 des betreffenden ersten und/oder zweiten Exemplars des Druckerzeugnisses ein in das betreffende Exemplar des Druckerzeugnis eingearbeiteter Glanzstreifen oder ein Perlglanzstreifen oder ein Iriodinstreifen verwendet wird,
o) dass während der Inspektion des Druckbildes des mindestens einen zweiten Exemplars des Druckerzeugnisses die jeweilige betreffende korrespondierende Referenzabbildung des mindestens einen ortsvarianten Elementes 06; 07; 08 z. B. in einem bildverarbeitenden Verfahren programmtechnisch auf das jeweilige in der aktuell erstellten fotografischen Abbildung 01 des jeweiligen zu inspizierenden mindestens einen zweiten Exemplars des Druckerzeugnisses enthaltene ortsvariable Element 06; 07; 08 positioniert wird,
p) dass die mit dem mindestens einen ortskonstanten Element 03; 04 korrespondierende, in dem ersten Speicher 11 gespeicherte Referenzabbildung und die mit dem mindestens einen ortsvarianten Element 06; 07; 08 korrespondierende, in dem zweiten Speicher 12 gespeicherte Referenzabbildung an einer Summierstelle 16 datentechnisch zu einer einzigen virtuellen oder synthetischen Referenzabbildung zusammengefasst werden, bevor die betreffenden in der virtuellen oder synthetischen Referenzabbildung zusammengefassten Referenzabbildungen dem Vergleicher 14 zugeführt werden, wobei in der virtuellen oder synthetischen Referenzabbildung der jeweilige Informationsgehalt dieser zusammengefassten Referenzabbildungen jeweils für sich erhalten bleibt.

### Bezugszeichenliste

- 01: Abbildung
- 02: Bezugspunkt
- 03: ortskonstantes Element
- 04: ortskonstantes Element
- 05: -
- 06: ortsvariantes Element
- 07: ortsvariantes Element
- 08: ortsvariantes Element
- 09: Positionskorrektur
- 10: -
- 11: erster Speicher
- 12: zweiter Speicher
- 13: Filter
- 14: Vergleicher
- 15: -
- 16: Summierstelle
- 17: Fehlermeldung

## Patentansprüche

1. Verfahren zur Inspektion von mindestens einem Exemplar eines Druckerzeugnisses,
a) bei dem in einem von einer Druckmaschine ausgeführten Druckprozess mindestens ein erstes Exemplar dieses Druckerzeugnisses und mindestens ein zweites Exemplar desselben Druckerzeugnisses hergestellt werden,
b) bei dem mittels einer Bilderfassungseinrichtung eines Inspektionssystems von dem mindestens einen ersten Exemplar des Druckerzeugnisses eine fotografische Abbildung (01) erstellt wird,
c) bei dem während der einer Lernphase nachfolgenden Inspektion mittels der Bilderfassungseinrichtung des Inspektionssystems von dem mindestens einen zweiten Exemplar des Druckerzeugnisses gleichfalls eine fotografische Abbildung (01) erstellt wird,
d) bei dem aus der während der Inspektion von dem mindestens einen zweiten Exemplar des Druckerzeugnisses erstellten fotografischen Abbildung (01) eine darin enthaltene fotografische Abbildung von mindestens einem hinsichtlich eines für das betreffende Exemplar festen Bezugspunktes (02) ortsvarianten Element (06; 07; 08) von einer gleichfalls in derselben erstellten fotografischen Abbildung (01) des betreffenden zweiten Exemplars des Druckerzeugnisses enthaltenen fotografischen Abbildung von mindestens einem hinsichtlich desselben festen Bezugspunktes (02) ortskonstanten Element (03; 04) separiert wird,
e) **dadurch gekennzeichnet, dass** in der der Inspektion vorausgehenden Lernphase des Inspektionssystems aus der von dem mindestens einen ersten Exemplar des Druckerzeugnisses erstellten fotografischen Abbildung (01) eine darin enthaltene fotografische Abbildung von mindestens einem hinsichtlich eines für das betreffende Exemplar festen Bezugspunktes (02) ortsvarianten Element (06; 07; 08) von einer gleichfalls in derselben erstellten fotografischen Abbildung (01) des betreffenden ersten Exemplars des Druckerzeugnisses enthaltenen fotografischen Abbildung von mindestens einem hinsichtlich desselben festen Bezugspunktes (02) ortskonstanten Element (03; 04) separiert wird,
f) wobei die aus der fotografischen Abbildung (01) des mindestens einen ersten Exemplars des Druckerzeugnisses gewonnene Abbildung des mindestens einen ortskonstanten Element (03; 04) als eine Referenzabbildung für das jeweilige mindestens eine ortskonstante Element (03; 04) und die aus derselben fotografischen Abbildung (01) des mindestens einen ersten Exemplars des Druckerzeugnisses gewonnene Abbildung des mindestens einen ortsvarianten Elementes (06; 07; 08) als eine andere Referenzabbildung für das jeweilige mindestens eine ortsvariante Element (06; 07; 08) verwendet werden,
g) wobei die in der fotografischen Abbildung (01) des mindestens einen zweiten Exemplars des Druckerzeugnisses enthaltene fotografische Abbildung des mindestens einen ortskonstanten Elementes (03; 04) mit der aus dem mindestens einen ersten Exemplar des Druckerzeugnisses gewonnenen, mit dem mindestens einen ortskonstanten Element (03; 04) korrespondierenden Referenzabbildung und die in derselben fotografischen Abbildung (01) desselben mindestens einen zweiten Exemplars des Druckerzeugnisses enthaltene fotografische Abbildung des mindestens einen ortsvarianten Elementes (06; 07; 08) mit der jeweiligen aus dem mindestens einen ersten Exemplar des Druckerzeugnisses gewonnenen, mit dem betreffenden ortsvarianten Element (06; 07; 08) korrespondierenden Referenzabbildung verglichen werden.

2. Verfahren nach Anspruch 1, **dadurch gekennzeichnet, dass** die jeweilige Separierung des mindestens einen hinsichtlich des festen Bezugspunktes ortsvarianten Elementes (06; 07; 08) von dem in derselben erstellten fotografischen Abbildung (01) des betreffenden ersten oder zweiten Exemplars enthaltenen fotografischen Abbildung des mindestens einen hinsichtlich des festen Bezugspunktes ortskonstanten Elementes (03; 04) mittels eines Filters oder mittels eines Filterverfahrens erfolgt.

3. Verfahren nach Anspruch 1 und/oder 2, **dadurch gekennzeichnet, dass** in der der Inspektion vorausgehenden Lernphase nach der Separierung mindestens eine fotografische Abbildung des mindestens einen hinsichtlich des festen Bezugspunktes (02) ortskonstanten Elementes (03; 04) als die mit dem mindestens einen ortskonstanten Element (03; 04) korrespondierende Referenzabbildung in einem ersten Speicher (11) und mindestens eine fotografische Abbildung des mindestens einen hinsichtlich des festen Bezugspunktes (02) ortsvarianten Elementes (06; 07; 08) als die mit dem jeweiligen ortsvarianten Element (06; 07; 08) korrespondierende Referenzabbildung in einem zweiten Speicher (12) gespeichert werden.

4. Verfahren nach Anspruch 1 und/oder 2 und/oder 3, **dadurch gekennzeichnet, dass** bei dem mindestens einen ersten Exemplar des Druckerzeugnisses und/oder bei dem mindestens einen zweiten Exemplar des Druckerzeugnisses für die jeweilige mindestens eine fotografische Abbildung des mindestens einen hinsichtlich des festen Bezugspunktes (02) ortskonstanten Elementes (03; 04) und/oder für die jeweilige mindestens eine fotografische Abbildung des mindestens einen hinsichtlich des festen Bezugspunktes (02) ortsvarianten Elementes (06; 07; 08) jeweils eine Positionskorrektur (09) ausgeführt werden, indem bei einer erwarteten und/oder erkannten Lageveränderung der jeweiligen Elemente (03; 04; 06; 07; 08) jeweils ein Bewegungsvektor zur Kompensation der bei der betreffenden Abbildung erwarteten und/oder erkannten Lageveränderung berechnet wird.

5. Verfahren nach Anspruch 4, **dadurch gekennzeichnet, dass** die Kompensation der erwarteten und/oder erkannten Lageveränderung bei dem mindestens einen ersten Exemplar des Druckerzeugnisses vor einer Speicherung der jeweiligen Referenzabbildung in einem der Speicher (11; 12) ausgeführt wird und/oder dass die Kompensation der erwarteten und/oder erkannten Lageveränderung bei dem mindestens einen zweiten Exemplar des Druckerzeugnisses vor Ausführung des jeweiligen Vergleiches mit der jeweiligen Referenzabbildung ausgeführt wird.

6. Verfahren nach mindestens einem der vorausgegangenen Ansprüche, **dadurch gekennzeichnet, dass** die Separierung der fotografischen Abbildung (01) des mindestens einen ersten Exemplars des Druckerzeugnisses und/oder die Separierung der fotografischen Abbildung (01) des mindestens einen zweiten Exemplars des Druckerzeugnisses jeweils von einer Steuereinheit ausgeführt oder zumindest gesteuert wird bzw. werden.

7. Verfahren nach mindestens einem der vorausgegangenen Ansprüche, **dadurch gekennzeichnet, dass** die Ausführung der Positionskorrektur (09) und/oder die Speicherung der jeweiligen Referenzabbildung in einem der Speicher (11; 12) jeweils von der Steuereinheit ausgeführt oder zumindest gesteuert wird bzw. werden.

8. Verfahren nach mindestens einem der vorausgegangenen Ansprüche, **dadurch gekennzeichnet, dass** die Separierung der fotografischen Abbildung (01) des mindestens einen ersten Exemplars des Druckerzeugnisses und/oder die Separierung der fotografischen Abbildung (01) des mindestens einen zweiten Exemplars des Druckerzeugnisses jeweils in Echtzeit ausgeführt werden und/oder dass die Ausführung der Positionskorrektur (09) und/oder die Speicherung der jeweiligen Referenzabbildung in einem der Speicher (11; 12) jeweils in Echtzeit ausgeführt werden.

9. Verfahren nach Anspruch 1 und/oder 2 und/oder 3 und/oder 4 und/oder 5 und/oder 6 und/oder 7 und/oder 8, **dadurch gekennzeichnet, dass** ein der Bilderfassung dienender Standardrahmen der Bilderfassungseinrichtung von der Steuereinheit zumindest in einer in der Bilderfassungsebene liegenden Richtung vergrößert wird.

10. Verfahren nach Anspruch 1 und/oder 2 und/oder 3 und/oder 4 und/oder 5 und/oder 6 und/oder 7 und/oder 8 und/oder 9, **dadurch gekennzeichnet, dass** als fester Bezugspunkt (02) des betreffenden Exemplars des Druckerzeugnisses jeweils ein Rand dieses Exemplars des Druckerzeugnisses oder dessen Mitte verwendet wird.

11. Verfahren nach Anspruch 1 und/oder 2 und/oder 3 und/oder 4 und/oder 5 und/oder 6 und/oder 7 und/oder 8 und/oder 9 und/oder 10, **dadurch gekennzeichnet, dass** dieses Verfahren im Wertdruck oder im Verpackungsdruck verwendet wird.

12. Verfahren nach Anspruch 1 und/oder 2 und/oder 3 und/oder 4 und/oder 5 und/oder 6 und/oder 7 und/oder 8 und/oder 9 und/oder 10 und/oder 11, **dadurch gekennzeichnet, dass** als Druckerzeugnis eine Banknote oder ein Wertpapier oder eine Faltschachtel verwendet wird.

13. Verfahren nach Anspruch 1 und/oder 2 und/oder 3 und/oder 4 und/oder 5 und/oder 6 und/oder 7 und/oder 8 und/oder 9 und/oder 10 und/oder 11 und/oder 12, **dadurch gekennzeichnet, dass** als das mindestens eine ortsvariante Element (06; 07; 08) des betreffenden ersten und/oder zweiten Exemplars des Druckerzeugnisses ein in das betreffende Exemplar des Druckerzeugnis eingearbeiteter Glanzstreifen oder ein Perlglanzstreifen oder ein Iriodinstreifen verwendet wird.

14. Verfahren nach Anspruch 1 und/oder 2 und/oder 3 und/oder 4 und/oder 5 und/oder 6 und/oder 7 und/oder 8 und/oder 9 und/oder 10 und/oder 11 und/oder 12 und/oder 13, **dadurch gekennzeichnet, dass** während der Inspektion des Druckbildes des mindestens einen zweiten Exemplars des Druckerzeugnisses die jeweilige betreffende korrespondierende Referenzabbildung des mindestens einen ortsvarianten Elementes (06; 07; 08) auf das jeweilige in der aktuell erstellten fotografischen Abbildung (01) des jeweiligen zu inspizierenden mindestens einen zweiten Exemplars des Druckerzeugnisses enthaltene ortsvariable Element (06; 07; 08) positioniert wird.

15. Verfahren nach Anspruch 1 und/oder 2 und/oder 3 und/oder 4 und/oder 5 und/oder 6 und/oder 7 und/oder 8 und/oder 9 und/oder 10 und/oder 11 und/oder 12 und/oder 13 und/oder 14, **dadurch gekennzeichnet, dass** die mit dem mindestens einen ortskonstanten Element (03; 04) korrespondierende, in dem ersten Speicher (11) gespeicherte Referenzabbildung und die mit dem mindestens einen ortsvarianten Element (06; 07; 08) korrespondierende, in dem zweiten Speicher (12) gespeicherte Referenzabbildung an einer Summierstelle (16) datentechnisch zu einer einzigen virtuellen oder synthetischen Referenzabbildung zusammengefasst werden, bevor die betreffenden in der virtuellen oder synthetischen Referenzabbildung zusammengefassten Referenzabbildungen dem Vergleicher (14) zugeführt werden, wobei in der virtuellen oder synthetischen Referenzabbildung der jeweilige Informationsgehalt dieser zusammengefassten Referenzabbildungen jeweils für sich erhalten bleibt.

## Claims

1. Method for inspecting at least one copy of a printed product,
a) in which at least one first copy of said printed product and at least one second copy of the same printed product are produced in a printing process carried out in a printing machine,
b) in which a photographic image (01) of the at least one first copy of the printed product is generated by means of an image capturing device of an inspection system,
c) in which during an inspection following a learning phase a photographic image (01) of the at least one second copy of the printed product is likewise generated by means of the image capturing device of the inspection system,
d) in which from the photographic image (01) generated during the inspection of the at least one second copy of the printed product, a photographic image contained therein of at least one element (06; 07; 08) which is spatially variant with regard to a reference point (02) that is fixed for the copy in question is separated from a photographic image also contained in the same generated photographic image (01) of the respective second copy of the printed product of at least one element (03; 04) which is spatially constant with regard to the same fixed reference point (02),
e) **characterized in that** during the learning phase of the inspection system preceding the inspection, a photographic image (01) of the at least one first copy of the printed product a photographic image contained therein of at least one element (06; 07; 08) which is spatially variant with regard to a reference point (02) that is fixed for the copy in question is separated from a photographic image also contained in the same generated photographic image (01) of the first copy in question of the printed product by at least one element (03; 04) which is spatially constant with regard to the same fixed reference point (02),
f) whereby the image of the at least one spatially constant element (03; 04) obtained from the photographic image (01) of the at least one first copy of the printed product is used as a reference image for the respective at least one spatially constant element (03; 04), and the image of the at least one spatially variant element (06; 07; 08) obtained from the same photographic image (01) of the at least one first copy of the printed product is used as another reference image for the respective at least one spatially variant element (06; 07; 08),
g) whereby the photographic image of the at least one spatially constant element (03; 04) contained in the photographic image (01) of the at least one second copy of the printed product is compared with the reference image obtained from the at least one first copy of the printed product corresponding to the at least one spatially constant element (03; 04), and the photographic image of the at least one spatially variant element (06; 07; 08) contained in the same photographic image (01) of the same at least one second copy of the printed product is compared with the respective reference image obtained from the at least one first copy of the printed product corresponding to the relevant spatially variant element (06; 07; 08).

2. Method according to claim 1, **characterized in that** each separation of the at least one element (06; 07; 08) which is spatially variant with regard to the fixed reference point from the photographic image of the at least one element (03; 04) which is spatially constant with regard to the fixed reference point and is contained in the same generated photographic image (01) of the respective first or second copy is carried out by means of a filter or by means of a filtering process.

3. Method according to claim 1 and/or 2, **characterized in that**, during the learning phase preceding the inspection, following the separation step, at least one photographic image of the at least one element (03; 04) which is spatially constant with regard to the fixed reference point (02) is stored in a first storage device (11) as the reference image corresponding to the at least one spatially constant element (03; 04), and at least one photographic image of the at least one element (06; 07; 08) which is spatially variant with regard to the fixed reference point (02) is stored in a second storage device (12) as the reference image corresponding to the respective spatially variant element (06; 07; 08).

4. Method according to claim 1 and/or 2 and/or 3, **characterized in that** in the at least one first copy of the printed product and/or in the at least one second copy of the printed product a position correction (09) is carried out for the respective at least one photographic image of the at least one element (03; 04) which is spatially constant with regard to the fixed reference point (02) and/or a position correction is carried out for the respective at least one photographic image of the at least one element (06; 07; 08) which is spatially variant with regard to the fixed reference point (02) for each anticipated and/or recognized change in position of the respective elements (03; 04; 06; 07; 08) by a motion vector being calculated that compensates for the anticipated and/or recognized change in position in the respective image.

5. Method according to claim 4, **characterized in that** the compensation for the anticipated and/or recognized change in position in the at least one first copy of the printed product is carried out before the respective reference image is stored in one of the storage devices (11; 12) and/or the compensation for the anticipated and/or recognized change in position in the at least one second copy of the printed product is carried out before the respective comparison with the respective reference image.

6. Method according to at least one on the preceding claims, **characterized in that** the separation of the photographic image (01) of the at least one first copy of the printed product and/or the separation of the photographic image (01) of the at least one second copy of the printed product is or are carried out or at least controlled by a control unit.

7. Method according to at least one on the preceding claims, **characterized in that** the execution of the position correction (09) and/or the storage of the respective reference image in one of the storage devices (11; 12) is or are carried out or at least controlled by the control unit.

8. Method according to at least one on the preceding claims, **characterized in that** the separation of the photographic image (01) of the at least one first copy of the printed product and/or the separation of the photographic image (01) of the at least one second copy of the printed product are each carried out in real time and/or that the execution of the position correction (09) and/or the storage of the respective reference image in one of the storage devices (11; 12) are each carried out in real time.

9. Method according to claim 1 and/or 2 and/or 3 and/or 4 and/or 5 and/or 6 and/or 7 and/or 8, **characterized in that** a standard frame of the image capturing device which serves to capture the image is enlarged by the control unit in at least one direction that lies within the image capturing plane.

10. Method according to claim 1 and/or 2 and/or 3 and/or 4 and/or 5 and/or 6 and/or 7 and/or 8, and/or 9, **characterized in that** an edge of the relevant copy of the printed product or the center thereof is used in each case as the fixed reference point (02) of said copy of the printed product.

11. Method according to claim 1 and/or 2 and/or 3 and/or 4 and/or 5 and/or 6 and/or 7 and/or 8 and/or 9 and/or 10, **characterized in that** said method is used in security printing or in package printing.

12. Method according to claim 1 and/or 2 and/or 3 and/or 4 and/or 5 and/or 6 and/or 7 and/or 8 and/or 9 and/or 10 and/or 11, **characterized in that** a banknote or a security document or a folding box is used as the printed product.

13. Method according to claim 1 and/or 2 and/or 3 and/or 4 and/or 5 and/or 6 and/or 7 and/or 8 and/or 9 and/or 10 and/or 11 and/or 12, **characterized in that** a shiny strip or a pearlescent strip or an Iriodin strip incorporated into the relevant copy of the printed product is used as the at least one spatially variant element (06; 07; 08) of the respective first and/or second copy of the printed product.

14. Method according to claim 1 and/or 2 and/or 3 and/or 4 and/or 5 and/or 6 and/or 7 and/or 8 and/or 9 and/or 10 and/or 11 and/or 12 and/or 13, **characterized in that** during the inspection of the printed image of the at least one second copy of the printed product the respective relevant corresponding reference image of the at least one spatially variant element (06; 07; 08) is positioned on the respective spatially variable element (06; 07; 08) contained in the currently generated photographic image (01) of the respective at least one second copy of the printed product to be inspected.

15. Method according to claim 1 and/or 2 and/or 3 and/or 4 and/or 5 and/or 6 and/or 7 and/or 8 and/or 9 and/or 10 and/or 11 and/or 12 and/or 13 and/or 14, **characterized in that** the reference image corresponding to the at least one spatially constant element (03; 04) stored in the first storage device (11), and the reference image corresponding to the at least one spatially variant element (06; 07; 08) stored in the second storage device (12) are combined at a summation point (16) by means of data processing to produce a single virtual or synthetic reference image before the relevant reference images that have been combined to form the virtual or synthetic reference image are supplied to the comparator (14), whereby in the virtual or synthetic reference image the respective data content of each of these combined reference images is maintained separately.

## Revendications

1. Procédé d'inspection d'au moins un exemplaire d'un produit d'impression,
a) où au moins un premier exemplaire dudit produit d'impression et au moins un deuxièmes exemplaire du même produit d'impression sont fabriqués lors d'un processus d'impression exécuté par une machine à imprimer,
b) où une représentation photographique (01) dudit au moins un premier exemplaire du produit d'impression est réalisée au moyen d'un dispositif de capture d'image d'un système d'inspection,
c) où une représentation photographique (01) dudit au moins un deuxième exemplaire du produit d'impression est également réalisée au moyen du dispositif de capture d'image du système d'inspection pendant l'inspection consécutive à une phase d'apprentissage,
d) où, à partir de la représentation photographique (01) réalisée pendant l'inspection dudit au moins un deuxième exemplaire du produit d'impression, une représentation photographique qui y est contenue d'au moins un élément (06 ; 07 ; 08) à localisation variable par rapport à un point de référence fixe (02) pour l'exemplaire concerné est séparée d'une représentation photographique d'au moins un élément (03 ; 04) à localisation constante par rapport au même point de référence fixe (02), contenue également dans la même représentation photographique (01) réalisée du deuxième exemplaire concerné du produit d'impression,
e) **caractérisé en ce que**, lors de la phase d'apprentissage du système d'inspection qui précède l'inspection, à partir de la représentation photographique (01) réalisée dudit au moins un premier exemplaire du produit d'impression, une représentation photographique qui y est contenue d'au moins un élément (06 ; 07 ; 08) à localisation variable par rapport à un point de référence fixe (02) pour l'exemplaire concerné est séparée d'une représentation photographique d'au moins un élément (03 ; 04) à localisation constante par rapport au même point de référence fixe (02), contenue également dans la même représentation photographique (01) réalisée du premier exemplaire concerné du produit d'impression,
f) la représentation dudit au moins un élément à localisation fixe (03 ; 04) obtenue à partir de la représentation photographique (01) dudit au moins un premier exemplaire du produit d'impression étant utilisée comme représentation de référence pour ledit au moins un élément à localisation fixe (03 ; 04) respectif et la représentation dudit au moins un élément à localisation variable (06 ; 07 ; 08) obtenue à partir de la même représentation photographique (01) dudit au moins un premier exemplaire du produit d'impression étant utilisée comme autre représentation de référence pour ledit au moins un élément à localisation variable (06 ; 07 ; 08) respectif,
g) la représentation photographique dudit au moins un élément à localisation fixe (03 ; 04) contenue dans la représentation photographique (01) dudit au moins un deuxième exemplaire du produit d'impression étant comparée à la représentation de référence obtenue à partir dudit au moins un premier exemplaire du produit d'impression, correspondant audit au moins un élément à localisation fixe (03 ; 04), et la représentation photographique dudit au moins un élément à localisation variable (06 ; 07 ; 08), contenue dans la même représentation photographique (01) du même au moins un deuxième exemplaire du produit d'impression, étant comparée à la représentation de référence respective obtenue à partir dudit au moins un premier exemplaire du produit d'impression, correspondant à l'élément (06 ; 07 ; 08) à localisation variable concerné.

2. Procédé selon la revendication 1, **caractérisé en ce que** la séparation respective dudit au moins un élément (06 ; 07 ; 08) à localisation variable par rapport au point de référence fixe (02), de la représentation photographique contenue dans la même représentation photographique (01) réalisée du premier ou du deuxième exemplaire concerné dudit au moins un élément (03 ; 04) à localisation constante par rapport au point de référence fixe, est effectuée au moyen d'un filtre ou d'un procédé de filtrage.

3. Procédé selon la revendication 1 et/ou 2, **caractérisé en ce que** lors de la phase d'apprentissage qui précède l'inspection après la séparation, au moins une représentation photographique dudit au moins un élément (03 ; 04) à localisation constante par rapport au point de référence fixe (02) est stockée dans une première mémoire (11) comme représentation de référence correspondant audit au moins un élément à localisation constante (03 ; 04), et au moins une représentation photographique dudit au moins un élément (06 ; 07 ; 08) à localisation variable par rapport au point de référence fixe (02) est stockée dans une deuxième mémoire (12) comme représentation de référence correspondant à l'élément à localisation variable (06 ; 07 ; 08).

4. Procédé selon la revendication 1 et/ou 2 et/ou 3, **caractérisé en ce que** pour ledit au moins un premier exemplaire du produit d'impression et/ou pour ledit au moins un deuxième exemplaire du produit d'impression, une correction de position (09) est effectuée pour ladite au moins une représentation photographique respective dudit au moins un élément (03 ; 04) à localisation constante par rapport au point de référence fixe (02) et/ou pour ladite au moins une représentation photographique respective dudit au moins un élément (06 ; 07 ; 08) à localisation variable par rapport au point de référence fixe (02), **en ce qu'**en cas de changement de position attendu et/ou détecté des éléments (03 ; 04 ; 06 ; 07 ; 08) respectifs, un vecteur de déplacement est calculé pour la compensation du changement de position attendu et/ou détecté pour la représentation concernée.

5. Procédé selon la revendication 4, **caractérisé en ce que** la compensation du changement de position attendu et/ou détecté pour ledit au moins un premier exemplaire du produit d'impression est effectuée avant un stockage de la représentation de référence respective dans une des mémoires (11 ; 12) et/ou **en ce que** la compensation du changement de position attendu et/ou détecté pour ledit au moins un deuxième exemplaire du produit d'impression est effectuée avant l'exécution de la comparaison respective avec la représentation de référence respective.

6. Procédé selon au moins une des revendications précédentes, **caractérisé en ce que** la séparation de la représentation photographique (01) dudit au moins un premier exemplaire du produit d'impression et/ou la séparation de la représentation photographique (01) dudit au moins un deuxième exemplaire du produit d'impression sont effectuées ou au moins commandées respectivement par une unité de commande.

7. Procédé selon au moins une des revendications précédentes, **caractérisé en ce que** l'exécution de la correction de position (09) et/ou le stockage de la représentation de référence respective dans une des mémoires (11 ; 12) sont effectués ou au moins commandés respectivement par l'unité de commande.

8. Procédé selon au moins une des revendications précédentes, **caractérisé en ce que** la séparation de la représentation photographique (01) dudit au moins un premier exemplaire du produit d'impression et/ou la séparation de la représentation photographique (01) dudit au moins un deuxième exemplaire du produit d'impression sont respectivement effectuées en temps réel et/ou **en ce que** l'exécution de la correction de position (09) et/ou le stockage de la représentation de référence respective dans une des mémoires (11 ; 12) sont respectivement effectués en temps réel.

9. Procédé selon la revendication 1 et/ou 2 et/ou 3 et/ou 4 et/ou 5 et/ou 6 et/ou 7 et/ou 8, **caractérisé en ce qu'**un cadre standard, servant à la capture d'image, du dispositif de capture d'image est agrandi par l'unité de commande au moins dans une direction située dans le plan de capture d'image.

10. Procédé selon la revendication 1 et/ou 2 et/ou 3 et/ou 4 et/ou 5 et/ou 6 et/ou 7 et/ou 8 et/ou 9, **caractérisé en ce que** comme point de référence fixe (02) de l'exemplaire du produit d'impression concerné il est respectivement recouru à un bord dudit exemplaire du produit d'impression ou au centre de celui-ci.

11. Procédé selon la revendication 1 et/ou 2 et/ou 3 et/ou 4 et/ou 5 et/ou 6 et/ou 7 et/ou 8 et/ou 9 et/ou 10, **caractérisé en ce que** ledit procédé est appliqué pour l'impression de papiers de valeurs ou pour l'impression d'emballages.

12. Procédé selon la revendication 1 et/ou 2 et/ou 3 et/ou 4 et/ou 5 et/ou 6 et/ou 7 et/ou 8 et/ou 9 et/ou 10 et/ou 11, **caractérisé en ce qu'**un billet de banque ou un titre ou une boîte pliante sont utilisés comme produit d'impression.

13. Procédé selon la revendication 1 et/ou 2 et/ou 3 et/ou 4 et/ou 5 et/ou 6 et/ou 7 et/ou 8 et/ou 9 et/ou 10 et/ou 11 et/ou 12, **caractérisé en ce qu'**une bande brillante ou une bande nacrée ou une bande d'Iriodin incorporée dans l'exemplaire du produit d'impression concerné est utilisée comme ledit au moins un élément à localisation variable (06 ; 07 ; 08) du premier et/ou deuxième exemplaire du produit d'impression concerné.

14. Procédé selon la revendication 1 et/ou 2 et/ou 3 et/ou 4 et/ou 5 et/ou 6 et/ou 7 et/ou 8 et/ou 9 et/ou 10 et/ou 11 et/ou 12 et/ou 13, **caractérisé en ce que** pendant l'inspection de l'image d'impression dudit au moins un deuxième exemplaire du produit d'impression, la représentation de référence correspondante concernée respective dudit au moins un élément à localisation variable (06 ; 07 ; 08) est positionnée sur l'élément à localisation variable (06 ; 07 ; 08) respectif contenu dans la représentation photographique (01) actuellement réalisée dudit au moins un deuxième exemplaire respectif à inspecter du produit d'impression.

15. Procédé selon la revendication 1 et/ou 2 et/ou 3 et/ou 4 et/ou 5 et/ou 6 et/ou 7 et/ou 8 et/ou 9 et/ou 10 et/ou 11 et/ou 12 et/ou 13 et/ou 14, **caractérisé en ce que** la représentation de référence correspondante stockée dans la première mémoire (11) avec ledit au moins un élément à localisation constante (03 ; 04) et la représentation de référence stockée dans la deuxième mémoire (12) avec ledit au moins un élément à localisation variable (06 ; 07 ; 08) sont assemblées informatiquement sur un emplacement de sommation (16) pour former une seule représentation de référence virtuelle ou synthétique avant que les représentations de référence concernées assemblées dans la représentation de référence virtuelle ou synthétique soient adressées au comparateur (14), les contenus informatifs respectifs desdites représentations de référence assemblées restant conservés chacun pour soi dans la représentation de référence virtuelle ou synthétique.
